(19) **Europäisches Patentamt**
**European Patent Office**
**Office européen des brevets**

(11) **EP 2 284 830 A1**

(12) **EUROPEAN PATENT APPLICATION**
published in accordance with Art. 153(4) EPC

(43) Date of publication:
**16.02.2011 Bulletin 2011/07**

(51) Int Cl.:
***G09G 5/02*** *(2006.01)* ***H04N 9/64*** *(2006.01)*

(21) Application number: **09753435.8**

(86) International application number:
**PCT/CN2009/000609**

(22) Date of filing: **31.05.2009**

(87) International publication number:
**WO 2009/143717 (03.12.2009 Gazette 2009/49)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **28.05.2008 CN 200810113241**
**26.06.2008 CN 200810115671**

(71) Applicant: **Phoebus Vision Opto-electronics Technology Ltd.**
**Haidian District, Beijing 100094 (CN)**

(72) Inventors:
• **ZHANG, Mingyong**
**Haidian District**
**Beijing 100094 (CN)**
• **WANG, Yanwei**
**Haidian District**
**Beijing 100094 (CN)**
• **BI, Yong**
**Haidian District**
**Beijing 100094 (CN)**

(74) Representative: **Charles, Glyndwr**
**Reinhard, Skuhra, Weise & Partner GbR**
**Patent- und Rechtsanwälte**
**Friedrichstrasse 31**
**80801 München (DE)**

(54) **METHOD AND SYSTEM FOR EXTENDING COLOR GAMUT**

(57) A system for expanding color gamut includes: a signal input unit configured to input color information of pixels; a forward transform unit configured to transform the color information of pixels to L, a and b values in a linear Lab color space; a color gamut expansion unit configured to receive a color gamut expansion coefficient, expands L, a and b values provided by the forward transform unit to new L, a and b values in the linear Lab color space according to the color gamut expansion coefficients; a reverse transform unit configured to transform the expanded L, a and b values to color information of pixels in a large color gamut; and a signal output unit configured to output the color information of pixels in the large color gamut. A corresponding method for expanding color gamut is provided.

FIG. 1

**Description**

**Field of the Invention**

The present invention relates to a display field, particularly to a color gamut expansion technique in the display field.

**Background of the Invention**

A wide color gamut display device can display more color content such as darker red, compared with common display device. However, the color gamut of the current image color standards and the video content adopting these image color standards is small, so if a wide color gamut display device is used to reproduce the video content, the wide color gamut display device won't take full advantage of its powerful color display capacity.

Color gamut expansion technique by which the color gamut prescribed in original color standards is mapped to the color gamut of a wide color gamut display device is a feasible solution. The technique which combines 3D-lookup table with interpolation is a frequently-used method to realize expansion of color gamut, which also is an important standard in color management procedure. According to this method, color display effect mainly depends on the specification of the 3D-lookup table and the data in the table, as well as the interpolation method employed. A color management system may include multiple 3D-lookup tables, each of which corresponds to a color gamut expansion solution. A user may select a color gamut expansion solution to obtain a desired display effect. Although the color gamut mapping method based on 3D-lookup table and interpolation provides openness and certain flexibility, it has the following disadvantages: i) the number of color display effects available to a user is limited and cannot adjust continuously, because the number of the color display effects corresponds to the number of 3D-lookup tables which is limited in consideration of cost; ii) the universality is not high, i.e., the data in lookup tables applied to a display device may not be applied to another display device satisfactorily; iii) a large number of memory resources are occupied for storing the data in the lookup tables, thereby increasing hardware cost; and iv) a limited number of lookup tables can hardly satisfy preference of different peoples, since for color gamut expansion, user's feeling on color expansion effect mainly depends on their preference which varies with persons. Therefore, the color gamut mapping method based on 3D-lookup table and interpolation have some problems on degree of freedom, universality and hardware cost.

Further, although many existing display devices are provided with a saturation adjusting device and method, the saturation defined for such device and method is principally a chromatic signal based on matrix transformation. For example, a RGB color signal is decomposed by a YCbCr signal into a brightness signal Y and two chromatic signals Cb and Cr, and saturation is adjusted mainly through adjusting these two chromatic signals. Since the chromatic signals are not defined in a uniform color space, such saturation adjusting device and method have low adjustment accuracy. If they are used in expansion of color gamut, obvious hue shift will occur. The so-called uniform color space refers to a color space in which human eyes perceive equal color difference in respectively equal geometrical difference in the color space.

**Summary of the Invention**

The purpose of the present invention is to overcome the foregoing defects and provide a system and a method for expanding color gamut that can realize continuous adjustment.

An aspect of the present invention provides a system for expanding color gamut, including:

a signal input unit configured to input color information of pixels;

a forward transform unit configured to transform the color information of pixels to L, a and b values in a linear Lab color space;

a color gamut expansion unit configured to expand the L, a and b values provided by the forward transform unit to new L, a and b values in the linear Lab color space according to a color gamut expansion coefficient;

a reverse transform unit configured to transform the expanded L, a and b values to color information of pixels in a large color gamut; and

a signal output unit configured to output the color information of pixels in the large color gamut.

The system for expanding color gamut may further includes: an important color management unit configured to determine whether a current color belongs to a range of important colors and calculate a weakening coefficient according to the result of determination;

The color gamut expansion unit is further configured to receive the weakening coefficient and expand the L, a and b values provided by the forward transform unit to the new L, a and b values in the linear Lab color space according to the color gamut expansion coefficient and the weakening coefficient.

The system for expanding color gamut may further include: a color gamut expansion coefficient input unit for a user to input the color gamut expansion coefficient.

The system for expanding color gamut may further include: a color temperature select unit for a user to select a color temperature value which is used as an input parameter of the forward transform unit and the reverse transform unit.

The important color management unit includes: a chromaticity coordinate calculation unit configured to calculate the chromaticity coordinate of the current color; and a weakening coefficient calculation unit configured to determine whether the current color belongs to the range of important colors according to the chromaticity coordinate of the current color, and calculate the weakening coefficient according to the result of determination.

The color information of pixels is RGB signals.

The forward transform unit may include: a XYZ chroma system forward transform unit configured to transform R, G and B tristimulus values in RGB system to X, Y and Z tristimulus values in XYZ system; and a linear Lab color space forward transform unit configured to transform X, Y and Z tristimulus values to L, a and b values in the linear Lab color space.

The reverse transform unit may include: a linear Lab color space reverse transform unit configured to transform the expanded L, a and b values in to the wide color gamut X, Y and Z tristimulus values which are in XYZ system; and a wide color gamut XYZ reverse transform unit configured to transform the wide color gamut X, Y and Z tristimulus values to R, G and B tristimulus values which are in the wide color gamut RGB system.

Another aspect of the present invention provides a method for expanding color gamut, comprising steps of:

1) inputting color information of pixels;

2) transforming the color information of pixels to L, a and b values in a linear Lab color space;

3) expanding the L, a and b values provided by Step 2) to new L, a and b values in the linear Lab color space according to a color gamut expansion coefficient;

4) transforming the expanded L, a and b values to color information of pixels which are in a large color gamut;

5) outputting the color information of pixels in the large color gamut.

Step 3) includes: calculating chromaticity coordinate of a current color, determining whether the current color belongs to a range of important colors, calculating a weakening coefficient according to result of determination, receiving the color gamut expansion coefficient, and calculating a corrected color gamut expansion coefficient according to the color gamut expansion coefficient and the weakening coefficient; and expanding the L, a and b values provided by Step 2) to the new L, a and b values which are in the linear Lab color space according to the corrected color gamut expansion coefficient.

In Step 3), the color gamut expansion coefficient is input by the user.

Step 2) includes: selecting a color temperature value by a user, and transforming the color information of pixels to the L, a and b values in the linear Lab color space according to the color temperature value; and Step 4) includes: transforming the expanded L, a and b values to the color information of pixels in the wide color gamut according to the color temperature value.

The color information of pixels is RGB signals.

Step 2) may includes sub-steps of:

21) transforming R, G and B tristimulus values in RGB system to X, Y and Z tristimulus values in XYZ system;

22) transforming the X, Y and Z tristimulus values to the L, a and b values which are in the linear Lab color space;

Step 4) includes sub-steps of:

41) transforming the expanded L, a and b values to wide color gamut X, Y and Z tristimulus values which are in XYZ system;

42) transforming the wide color gamut X, Y and Z tristimulus values to R, G and B tristimulus values which are in the wide color gamut RGB system.

in Step 3), determining whether the current color belongs to the range of important colors includes steps of:

31) setting chromaticity coordinate benchmark values for all important colors;

32) if, in chromaticity coordinate system, the chromaticity coordinate of the current color falls in a geometric region that has specific dimensions limited by preset threshold values, and centers on the chromaticity coordinate benchmark value, then the current color is denoted to belong to the range of important colors; otherwise, the current color doesn't belong to the range of important colors.

in Step 32), the geometric figure is a square and the sides of the square are parallel or perpendicular to the coordinate axes of the chromaticity coordinate system.
in Step 32), the geometric figure is a square and the sides of the square form a 45-degree angle with the coordinate axes of the chromaticity coordinate system.
in Step 3), calculating the weakening coefficient and the corrected expansion coefficient includes steps of

33) when the current color doesn't belong to the range of important colors, taking the weakening coefficient K=1; when the current color belongs to the range of important colors, for each chromaticity coordinate benchmark value, squaring that pass the chromaticity coordinate point of the current color and center on the chromaticity coordinate benchmark value will be drawn; taking the ratio between the side length of the smallest square and the side length of the square limited by the threshold as the weakening coefficient K;

34) calculating the corrected color gamut expansion coefficient using the weakening coefficient K and the color gamut expansion coefficient VGE according to an equation of $VGE_{new}=(VGE-1)*K+1$.

The beneficial technical effects achieved by the present invention include:

1. The system and method for expanding color gamut according to the present invention can continuously adjust the color gamut expansion coefficient.

2. The method for expanding color gamut according to the present invention provides high calculation efficiency and low demand on system resource, and the requirement of real-time processing of video signals with large data volume can be met satisfactorily.

3. The color gamut expansion is performed in linear Lab color space according to the present invention, which can effectively avoid hue deviation and generate higher precision and accuracy.

4. The management process of important colors is introduced in the system and method for expanding color gamut according to the present invention, and thus important colors are prevented from excessive distortion during expansion of color gamut.

## Brief Description of the Drawings

Hereinafter, the present invention will be described in details with reference to the attached drawings, in which:

FIG. 1 is a schematic of a continuously adjustable color gamut expansion device according to an embodiment of the present invention;

FIG. 2 is a schematic of a continuously adjustable color gamut expansion device according to another embodiment of the present invention;

FIG. 3 is a model about the range of important colors in chromaticity coordinate system;

FIG. 4 is an alternative model about the range of important colors in chromaticity coordinate system;

FIG. 5 is a schematic for calculation of the distance from the chromaticity coordinate point of an input signal to the chromaticity coordinate point of an important color in chromaticity coordinate system, in the case that the range of important colors takes the model in FIG. 3 as an example;

FIG. 6 is a schematic for calculation of the distance from the chromaticity coordinate point of an input signal to the chromaticity coordinate point of an important color in chromaticity coordinate system, in the case that the range of important colors takes the model in FIG. 4 as an example.

**Detailed Description of the Invention**

Embodiment 1

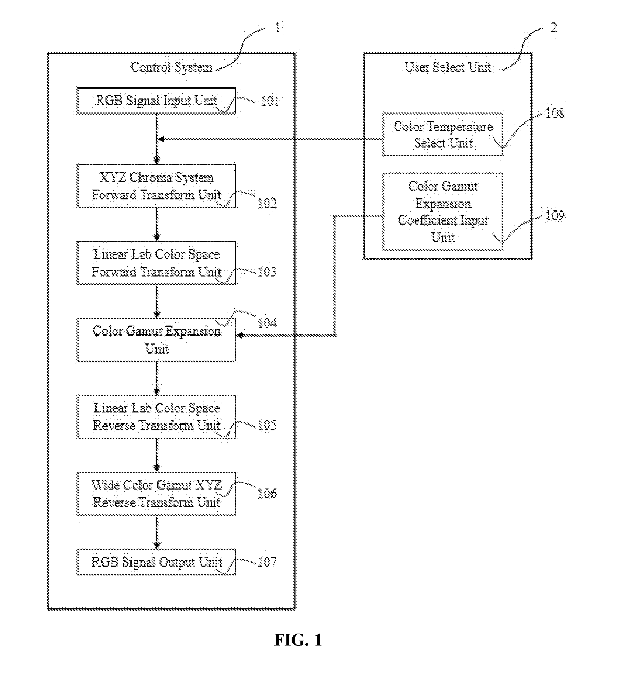

Hereinafter, the present invention will be described in details with reference to the attached drawings. FIG. 1 is a schematic of a continuously adjustable color gamut expansion device according to an embodiment. The device includes a user select unit 2 and a control system 1. The control system 1 receives signals sent from the user select unit 2 and completes expansion of color gamut. The user select unit 2 includes a color temperature select unit 108 through which the user may select a color temperature value, and a color gamut expansion coefficient input unit 109 through which the user may freely set color gamut expansion coefficient. The color temperature select unit 108 provides several color temperature values, such as 5400K, 6500K and 9300K, for the user to select. The control system 1 includes an RGB signal input unit 101, a XYZ chroma system forward transform unit 102, a linear Lab color space forward transform unit 103, a color gamut expansion unit 104, a linear Lab color space reverse transform unit 105, a wide color gamut XYZ reverse transform unit 106, and an RGB signal output unit 107. An RGB signal is a digital signal indicating color information of pixels in video data. The RGB signal input unit 101 receives a video signal that conforms to a predetermined color coding standard, such as: Rec. ITU-R BT. 709 Standard. Each pixel point in the video signals contains information of red, green and blue tristimulus values, which are referred to R, G and B tristimulus values. The XYZ chroma system forward transform unit 102 transforms the R, G and B tristimulus values to the X, Y and Z tristimulus values which are in XYZ chroma system. The transformation process varies with color temperature. Color temperature value is selected by a user through the color temperature select unit 108. The linear Lab color space forward transform unit 103 transforms the X, Y and Z tristimulus values to L, a and b values which are in a linear Lab color space. The transformation process is also determined by color temperature value. The definition of the linear Lab color space and the transformation process from XYZ tristimulus values to values of the linear Lab color space are disclosed in the reference titled "Evaluation of smoothness tonal change reproduction on multi-primary display: Comparison of color conversion algorithm, Proc. SPIE, Vol. 5289, pp: 275-283(2004)" which is published in 2004. The color gamut expansion unit 104 receives the values freely set by the user through the color gamut expansion coefficient input unit 109, performs color gamut expansion calculations for a and b values to obtain $a_{new}$ and $b_{new}$ values. Then, the linear Lab color space reverse transform unit 105 transforms $a_{new}$ and $b_{new}$ values as well as L values back to $X_{new}$, $Y_{new}$ and $Z_{new}$ tristimulus values which are in XYZ system. The wide color gamut XYZ reverse transform unit 106 transforms $X_{new}$, $Y_{new}$ and $Z_{new}$ to $R_{new}$, $G_{new}$ and $B_{new}$ which are in wide color gamut RGB system and outputs $R_{new}$, $G_{new}$ and $B_{new}$ signals via the RGB signal output unit 107.

Embodiment 2

According to a second embodiment of the present invention, a method for continuously adjustable color gamut expansion is provided. Specifically, the method includes:

Step 201: the RGB signal input unit 101 inputs a video signal that conforms to a predetermined color coding standard, and each pixel point in the video signal contains information of red, green and blue tristimulus values, which are referred to R, G and B tristimulus values;

Step 202: a user selects one from a plurality of color temperature values via the color temperature select unit 108 on the user select unit 2;

Step 203: the XYZ chroma system forward transform unit 102 transforms R, G and B tristimulus values to X, Y and Z tristimulus values according to corresponding color coding standard and based on the color temperature value selected by the user;

In an example, Step 203 includes the following specific steps:

Step 2031: R, G and B tristimulus values are transformed to linear color data Rs, Gs and Bs by using three 1D-lookup tables corresponding to red, green and blue colors respectively, and the transformation relation lies on color coding standard , according to a color coding standard such as BT. 709 Standard. For BT.709 Standard, the following formula (1-1) may be used:

$$\begin{cases} V = 1.099 M^{0.45} - 0.099 & \text{If } 0.018 \leq M \leq 1 \\ V = 4.500 M & \text{If } 0 \leq M < 0.018 \end{cases} \qquad \text{formula (1-1)}$$

Wherein, M indicates normalized signal intensity and V indicates a linearized data result. If the RGB color signal is represented with a binary data including n bits, then when $M=R/2^n$, $V=Rs$; when $M=G/2^n$, $V=Gs$; when $M=B/2^n$, $V=Bs$, where the value range of R, G and B is $0\sim(2^n-1)$, and all values V are calculated in advance and stored in the memory of the XYZ chroma system forward transform unit 102 in the form of lookup tables.

Step 2032: the XYZ chroma system forward transform unit 102 stores a forward transform matrices to which all color temperature values selectable through the color temperature select unit 108 correspond, through a color temperature value selected by the user, the XYZ chroma system forward transform unit 102 may find the forward transform

matrix $\begin{bmatrix} C11 & C12 & C13 \\ C21 & C22 & C23 \\ C31 & C32 & C33 \end{bmatrix}$ corresponding to the color temperature value, and X, Y and Z are obtained from formula

(1-2):

$$\begin{bmatrix} X \\ Y \\ Z \end{bmatrix} = \begin{bmatrix} C11 & C12 & C13 \\ C21 & C22 & C23 \\ C31 & C32 & C33 \end{bmatrix} \cdot \begin{bmatrix} Rs \\ Gs \\ Bs \end{bmatrix} \qquad \text{formula (1-2)}$$

For example, if the color temperature set by the user is 6500K, the forward transformation relation will be:

$$\begin{bmatrix} X \\ Y \\ Z \end{bmatrix} = \begin{bmatrix} 0.4124 & 0.3576 & 0.1805 \\ 0.2126 & 0.7152 & 0.0722 \\ 0.0193 & 0.1192 & 0.9505 \end{bmatrix} * \begin{bmatrix} Rs \\ Gs \\ Bs \end{bmatrix} \qquad \text{formula (1-3)}$$

Step 204: the linear Lab color space forward transform unit 103 transforms X, Y, Z tristimulus values to L, a and b values which are in a linear Lab color space in accordance with formula (1-4):

$$\begin{bmatrix} L \\ a \\ b \end{bmatrix} = T_{Lab} * \begin{bmatrix} X \\ Y \\ Z \end{bmatrix} = \begin{bmatrix} 0 & 100/Y_n & 0 \\ 500/X_n & -500/Y_n & 0 \\ 0 & 200/Y_n & -200/Z_n \end{bmatrix} * \begin{bmatrix} X \\ Y \\ Z \end{bmatrix} \qquad \text{formula (1-4)}$$

Wherein, different color temperature corresponds to different $T_{Lab}$. Each of the color temperature values selected and set by the user through the color temperature select unit 108 corresponds to one $T_{Lab}$. All $T_{Lab}$ are stored in the linear Lab color space forward transform unit 103. The linear Lab color space forward transform unit 103 may easily find the corresponding $T_{Lab}$ by reading the color temperature value set by the user. The $N_n$, $Y_n$ and $Z_n$ in $T_{Lab}$ are determined in the following way, and each color temperature value set by the user corresponds to a chromaticity coordinate. For example, if the color temperature value set by the user is $T_A$, the chromaticity coordinate to which $T_A$ corresponds will be $(x_A, y_A, z_A)$, and then $X_n$, $Y_n$ and $Z_n$ will be calculated with formula (1-5):

$$\begin{cases} X_n = \dfrac{x_A}{y_A} * 100 \\ Y_n = 100 \\ Z_n = \dfrac{z_A}{y_A} * 100 \end{cases} \qquad \text{formula (1-5)}$$

For example, if the color temperature set by the user is 6500K and its chromaticity coordinate is (0.3127, 0.3290, 0.3583), $(X_n, Y_n$ and $Z_n)$=(95.04, 100, 108.89) may be obtained according to formula (1-5); thereby the formula (1-6) for transforming from XYZ chroma system to linear Lab color space at this color temperature may be obtained from formula (1-4) as follows:

$$\begin{bmatrix} L \\ a \\ b \end{bmatrix} = \begin{bmatrix} 0 & 1.0 & 0 \\ 5.2609 & -5.0 & 0 \\ 0 & 2.0 & -1.8367 \end{bmatrix} * \begin{bmatrix} X \\ Y \\ Z \end{bmatrix} \qquad \text{formula (1-6)}$$

According to this embodiment, the color gamut expansion is performed in a linear Lab color space. The linear Lab color space is a good approximation of a standard Lab color space which is a uniform color space defined by International Commission on Illumination (CIE) and a standard working space in color management flow. The so-called uniform color space is a color space in which human eyes perceive equal color difference in respectively equal geometrical difference in the color space. Nevertheless, the algorithm for transforming the color signal of video to a Lab color space is complex and unfavorable to real-time processing, so the method for expanding color gamut in this embodiment defines working space in a linear Lab color space. Transformation algorithm is simplified and calculation amount is reduced significantly. Moreover, as this embodiment conducts the algorithm of color gamut expansion in a linear Lab color space that is approximate to the uniform color space, comparing with the adjustment method based on chromatic signal, hue deviation may be avoided effectively, and precision and accuracy may be improved through the embodiment.

Step 205: the color gamut expansion unit 104 receives a color gamut expansion coefficient VGE set freely by the user through the color gamut expansion coefficient input unit 109, and expands a and b in linear Lab color space to obtain $a_{new}$ and $b_{new}$. The calculation method employs formula (1-7):

$$\begin{cases} a_{new} = a * VGE; \\ b_{new} = b * VGE; \end{cases} \qquad \text{Equation (1-7)}$$

Step 206: the linear Lab color space reverse transform unit 105 transforms L, $a_{new}$ and $b_{new}$ back to values which are in XYZ space to obtain $X_{new}$, $Y_{new}$ and $Z_{new}$ by using the following formula (1-8):

$$\begin{bmatrix} X_{new} \\ Y_{new} \\ Z_{new} \end{bmatrix} = T^{-1}_{Lab} \begin{bmatrix} L \\ a_{new} \\ b_{new} \end{bmatrix} \qquad \text{Equation (1-8)}$$

Wherein, $T^{-1}_{Lab}$ is an inverse matrix of $T_{Lab}$ in Step 204, so different color temperature values correspond to different $T^{-1}_{Lab}$, all $T^{-1}_{Lab}$ are stored in the memory of the linear Lab color space reverse transform unit 105, and the linear Lab color space reverse transform unit 105 reads a corresponding $T^{-1}_{Lab}$ according to the color temperature value set by the user and employs formula (1-8) to obtain $X_{new}$, $Y_{new}$ and $Z_{new}$ at the set color temperature.

Step 207: the wide color gamut XYZ reverse transform unit 106 transforms $X_{new}$, $Y_{new}$ and $Z_{new}$ back to $R_{new}$, $G_{new}$ and $B_{new}$ tristimulus values which are in RGB system.

The detailed process of Step 207 is described below:

Step 2071: a reverse transform matrix for a wide color gamut display device XYZ chroma system

$$\begin{bmatrix} T11 & T12 & T13 \\ T21 & T22 & T23 \\ T31 & T32 & T33 \end{bmatrix}$$ is used. The matrix is determined by tricolor chromaticity coordinates of the wide color gamut display device and the color temperature corresponding to the brightest white field of this display device. Its calculation method may be obtained from related colorimetric knowledge. $X_{new}$, $Y_{new}$ and $Z_{new}$ are transformed to linear color data $R_{snew}$, $G_{snew}$ and $B_{snew}$ by using the following formula (1-9):

$$\begin{bmatrix} R_{snew} \\ G_{snew} \\ B_{snew} \end{bmatrix} = \begin{bmatrix} T11 & T12 & T13 \\ T21 & T22 & T23 \\ T31 & T32 & T33 \end{bmatrix} \begin{bmatrix} X_{new} \\ Y_{new} \\ Z_{new} \end{bmatrix} \qquad \text{formula (1-9)}$$

Step 2072: by using the preestablished lookup tables for mapping the tristimulus values in linear Lab color space to the tristimulus values in RGB system, $R_{snew}$, $G_{snew}$ and $B_{snew}$ are transformed to $R_{new}$, $G_{new}$ and $B_{new}$ tristimulus values which are in RGB system.

In the foregoing transformation process, Step 206 and Step 207 may be merged into one step.

Step 208: the RGB signal output unit 107 outputs $R_{new}$, $G_{new}$ and $B_{new}$.

As all matrices the transformation process needs in the system and method for expanding color gamut in this embodiment may be calculated in advance and stored in a memory, the matrices multiplication involved needs only a few linear calculations. Further, no nonlinear calculation in the algorithm according to this embodiment is needed, and thus the calculation efficiency is high and the requirement of large-data-volume video on real-time processing can be met.

In this embodiment, the input color information of pixels is RGB signal. However, it will be appreciated by those skilled in the art that, other signals, such as YCbCr signals, may also be used as color information of pixels in the present invention.

Embodiment 3

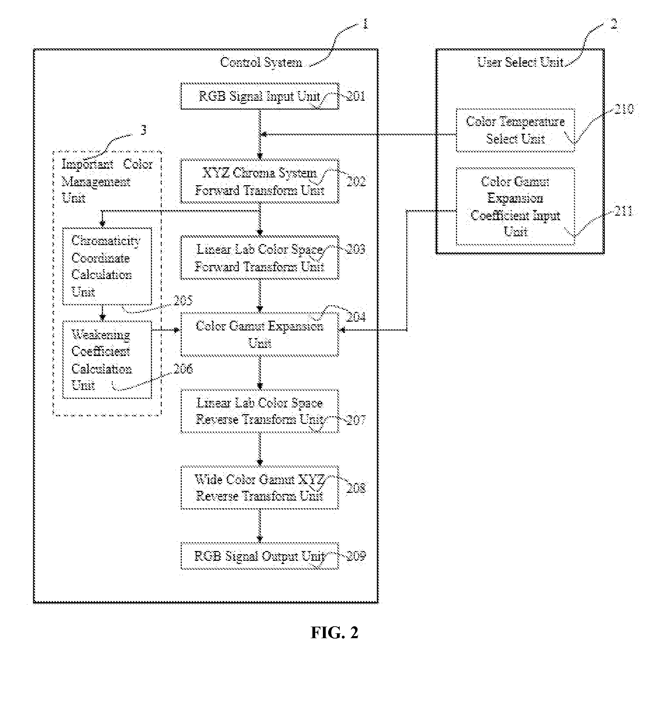

FIG. 2 shows a third embodiment according to the present invention. Hereinafter, the embodiment will be described in details with reference to the drawings.

This embodiment relates to a concept of important colors. Brief introduction will be given to important colors at first.

Important colors refer to the colors which human eyes often see and are sensitive to. For example, human eyes are sensitive to skin colors. better capacity of skin color reproduction will be required in display technique. Therefore, the management of important colors can further improve display effect.

To manage important colors, important color areas and unimportant color areas should be identified firstly, or in other words, the boundaries of important colors should be determined. Color is a three-dimensional physical quantity, an interested important color area often exists in the form of a closed irregular solid in color space, and thus it is a complex job to accurately determine its boundaries. Usually, it is expressed with the integrated result of different predicates in different color spaces (such as: RGB space, Lab space and YCbCr space). Further, there may be more than one important color area and different important color areas may have different shapes. The complexity of the calculation of whether an input color point belongs to an important color area may be increased.

Owing to the foregoing complexity, when conventional display technique adjusts saturation, the saturation of the whole displayed picture is changed as a whole without protection on important colors. As a result, when an important color (such as skin color) exists in the picture, obvious deviation of the important color (skin color) can be perceived. Accordingly, Embodiment 3 and Embodiment 4 provide a color management solution including management of important colors.

FIG. 2 is a schematic of a continuously adjustable color gamut expansion device according to the present embodiment. The device includes a user select unit 2 and a control system 1. The control system 1 receives the signals sent from the user select unit 2 and completes expansion of color gamut. The user select unit 2 includes a color temperature select unit 210 through which the user may select a color temperature value, and a color gamut expansion coefficient input unit 211 through which the user may freely set a color gamut expansion coefficient. The color temperature select unit 210 provides several color temperature values, such as 5400K, 6500K and 9300K, for the user to select. The control system 1 includes an RGB signal input unit 201, a XYZ chroma system forward transform unit 202, a linear Lab color space forward transform unit 203, an important color management unit 3 including a chromaticity coordinate calculation unit 205 and a weakening coefficient calculation unit 206, a color gamut expansion unit 204, a linear Lab color space reverse transform unit 207, a wide color gamut XYZ reverse transform unit 208 and an RGB signal output unit 209. An RGB signal is a digital signal indicating color information of pixels in video data. The RGB signal input unit 201 receives a video signal that conforms to a predetermined color coding standard, such as: Rec. ITU-R BT. 709 Standard. Each pixel point in the video signals contains information of red, green and blue tristimulus values, which are referred to R, G and B tristimulus values. The XYZ chroma system forward transform unit 202 transforms the R, G and B tristimulus values to the X, Y and Z tristimulus values which are in XYZ chroma system. The transformation process varies with color temperature. Color temperature value is selected by a user through the color temperature select unit 210. The linear Lab color space forward transform unit 203 transforms X, Y and Z tristimulus values to L, a and b values which are in a linear Lab color space. The transformation process is also determined by color temperature value. The definition of the linear Lab color space and the transformation process from XYZ tristimulus values to values of the linear Lab color space are disclosed in the reference titled "Evaluation of smoothness tonal change reproduction on multi-primary display: Comparison of color conversion algorithm, Proc. SPIE, Vol. 5289, pp: 275-283(2004)" which is published in 2004. The important color management unit 3 in this embodiment is configured to determine whether the current color belongs to the range of important colors and calculate a weakening coefficient according to the result of the determination. The important color management unit 3 includes a chromaticity coordinate calculation unit 205 and a weakening coefficient calculation unit 206. The chromaticity coordinate calculation unit 205 transforms X, Y and Z tristimulus values to the chromaticity coordinate (x, y) which are in chromaticity coordinate system. The weakening coefficient calculation unit 206 determines whether the chromaticity coordinate (x, y) belongs to the range of important colors and calculates weakening coefficient according to the result of determination. The color gamut expansion unit 204 receives the values freely set by the user through the color gamut expansion coefficient input unit 211 as well as the weakening coefficient, and performs color gamut expansion calculation for a and b values to obtain $a_{new}$ and $b_{new}$ values. Then, the linear Lab color space reverse transform unit 207 transforms $a_{new}$ and $b_{new}$ values as well as L values back to $X_{new}$, $Y_{new}$ and $Z_{new}$ tristimulus values which are in XYZ chroma system. The wide color gamut XYZ reverse transform unit 208 transforms $X_{new}$, $Y_{new}$ and $Z_{new}$ to $R_{new}$, $G_{new}$ and $B_{new}$ which are in wide color gamut RGB system and outputs $R_{new}$, $G_{new}$ and $B_{new}$ signals via the RGB signal output unit 209.

Embodiment 4

According to a fourth embodiment of the present invention, a method for continuously adjustable color gamut expansion is provided. Specifically, the method includes:

Step 401: the RGB signal input unit 201 inputs a video signal that conforms to a predetermined color coding standard, and each pixel point in the video signal contains information of red, green and blue tristimulus values, which are referred to R, G and B tristimulus values;

Step 402: a user selects one from a plurality of color temperature values via the color temperature select unit 210 on the user select unit 2;

Step 403: The XYZ chroma system forward transform unit 202 transforms R, G and B tristimulus values to X, Y and Z tristimulus values according to corresponding color coding standard and based on the color temperature value selected by the user;

In an example, Step 403 includes the following specific steps:

Step 4031: R, G and B tristimulus values are transformed to linear color data Rs, Gs and Bs by using three 1D-lookup tables corresponding to red, green and blue colors respectively, and the transformation relation lies on color coding standard, according to a color coding standard such as BT.709 Standard. For BT.709 Standard, the following formula (2-1) may be used.

$$\begin{cases} V = 1.099 M^{0.45} - 0.099 & 0.018 \leq M \leq 1 \\ V = 4.500 M & 0 \leq M < 0.018 \end{cases} \qquad \text{formula (2-1)}$$

Wherein, M indicates normalized signal intensity and V indicates a linearized data result. If the RGB color signal is represented with a binary data including n bits, then when $M = R/2^n$, $V = Rs$; when $M = G/2^n$, $V = Gs$; when $M = B/2^n$, $V = Bs$, where the value range of R, G and B is $0 \sim (2^n - 1)$, and all values V are calculated in advance and stored in the memory of the XYZ chroma system forward transform unit 202 in the form of lookup tables.

Step 4032: The XYZ chroma system forward transform unit 202 stores a forward transform matrices to which all color temperature values selectable through the color temperature select unit 210 correspond, through a color temperature value selected by the user, the XYZ chroma system forward transform unit 202 may find the forward transform

matrix $\begin{bmatrix} C11 & C12 & C13 \\ C21 & C22 & C23 \\ C31 & C32 & C33 \end{bmatrix}$ corresponding to the color temperature value, and X, Y and Z are obtained from formula

(2-2):

$$\begin{bmatrix} X \\ Y \\ Z \end{bmatrix} = \begin{bmatrix} C11 & C12 & C13 \\ C21 & C22 & C23 \\ C31 & C32 & C33 \end{bmatrix} \cdot \begin{bmatrix} Rs \\ Gs \\ Bs \end{bmatrix} \qquad \text{formula (2-2)}$$

For example, if the color temperature set by the user is 6500K, the forward transform relation will be:

$$\begin{bmatrix} X \\ Y \\ Z \end{bmatrix} = \begin{bmatrix} 0.4124 & 0.3576 & 0.1805 \\ 0.2126 & 0.7152 & 0.0722 \\ 0.0193 & 0.1192 & 0.9505 \end{bmatrix} \cdot \begin{bmatrix} Rs \\ Gs \\ Bs \end{bmatrix} \qquad \text{formula (2-3)}$$

Step 404: the linear Lab color space forward transform unit 203 transforms X, Y and Z tristimulus values to L, a and b values which are in a linear Lab color space in accordance with formula (2-4):

$$\begin{bmatrix} L \\ a \\ b \end{bmatrix} = T_{Lab} \cdot \begin{bmatrix} X \\ Y \\ Z \end{bmatrix} = \begin{bmatrix} 0 & 100/Y_n & 0 \\ 500/X_n & -500/Y_n & 0 \\ 0 & 200/Y_n & -200/Z_n \end{bmatrix} \cdot \begin{bmatrix} X \\ Y \\ Z \end{bmatrix} \qquad \text{formula (2-4)}$$

Wherein, different color temperature corresponds to different $T_{Lab}$. Each of the color temperature value selected and set by the user via the color temperature select unit 210 corresponds to one $T_{Lab}$. All $T_{Lab}$ are stored in the linear Lab color space forward transform unit 203. The linear Lab color space forward transform unit 203 may easily find the corresponding $T_{Lab}$ by reading the color temperature value set by the user. The $X_n$, $Y_n$ and $Z_n$ in $T_{Lab}$ are determined in the following way, and each color temperature value set by the user corresponds to a chromaticity coordinate. For example, if the color temperature value set by the user is $T_A$, the chromaticity coordinate to which $T_A$ corresponds will be $(x_A, y_A, z_A)$ and then $X_n$, $Y_n$ and $Z_n$ will be calculated with formula (2-5):

$$\begin{cases} X_n = \dfrac{x_A}{y_A} \cdot 100 \\ Y_n = 100 \\ Z_n = \dfrac{z_A}{y_A} \cdot 100 \end{cases} \qquad \text{formula (2-5)}$$

For example, if the color temperature set by the user is 6500K and its chromaticity coordinate is (0.3127, 0.3290, 0.3583), (Xn, Yn, Zn)=(95.05, 100, 108.91) may be obtained according to formula (2-5); thereby the formula (2-6) for transformation from XYZ chroma system to linear Lab color space at this color temperature may be obtained from formula (2-4) as follows:

$$\begin{bmatrix} L \\ a \\ b \end{bmatrix} = \begin{bmatrix} 0 & 1.0 & 0 \\ 5.2604 & -5.0 & 0 \\ 0 & 2.0 & -1.8364 \end{bmatrix} \cdot \begin{bmatrix} X \\ Y \\ Z \end{bmatrix} \qquad \text{formula (2-6)}$$

According to this embodiment, the color gamut expansion is performed in a linear Lab color space. The linear Lab color space is a good approximation of a standard Lab color space which is a uniform color space defined by International Commission on Illumination (CIE) and a standard working space in color management flow. The so-called uniform color space is a color space in which human eyes perceive equal color difference in respectively equal geometrical difference in the color space. Nevertheless, the algorithm for transforming the color signal of video to a Lab color space is complex and unfavorable to real-time processing, so the method for expanding color gamut in this embodiment defines working space in a linear Lab color space. Transformation algorithm is simplified and calculation amount is reduced significantly. Moreover, as this embodiment conducts the algorithm of color gamut expansion in a linear Lab color space that is approximate to the uniform color space, comparing with the adjustment method based on chromatic signal, hue deviation may be avoided effectively, precision and accuracy may be improved through the embodiment.

Step 405: The chromaticity coordinate calculation unit 205 calculates corresponding RGB chromaticity coordinate (x, y) from X, Y and Z, in which x and y are calculated with formula (2-7).

$$\begin{cases} x = X/(X+Y+Z) \\ y = Y/(X+Y+Z) \end{cases} \qquad \text{formula (2-7)}$$

Step 406: the weakening coefficient calculation unit 206 receives x and y, determines whether the RGB chromaticity coordinate (x, y) belongs to the range of the chromaticity coordinates to which important colors correspond and the nearby coordinates (i.e. the range of important colors), and calculates a weakening coefficient K according to the result of determination.

Step 406 may (but not limited to) be realized by the following process:

Firstly, determining whether RGB chromaticity coordinate (x, y) belongs to the range of important colors, the range of important colors may be one of the following two models about range of important colors, provided that there are three chromaticity coordinates of important colors, (x1, y1), (x2, y2) and (x3, y3):

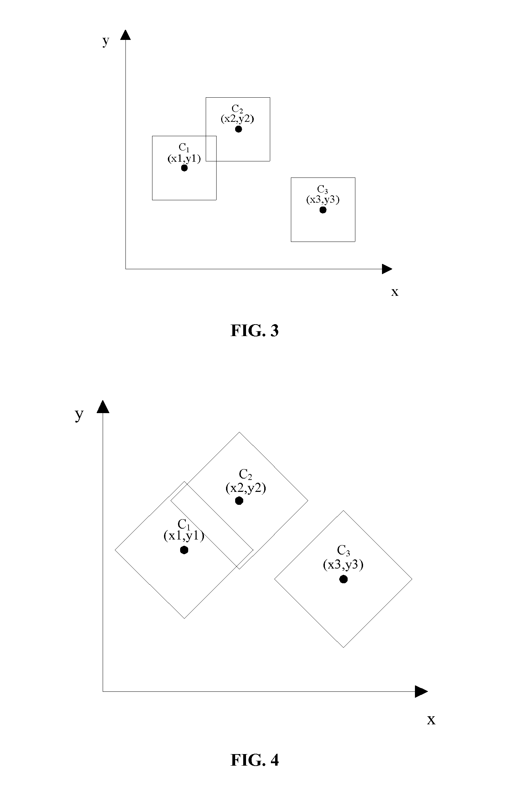

Model 1: taking the chromaticity coordinate of an important color as a center of a square, and defining the range of the square formed by expanding a specific distance from the center as the range of important colors, and the boundaries of the square are parallel or perpendicular to the coordinate axes of the chromaticity coordinate system, as shown in FIG. 3.

Model 2: taking the chromaticity coordinate of an important color as a center of a square, and defining the range of the square formed by expanding a specific distance from the center as the range of important colors, and the boundaries of the square form a 45-degree angle with the coordinate axes of the chromaticity coordinate system, as shown in FIG. 4.

Taking Model 1 as an example, step 406 may (but not limited to) be realized by the following process:

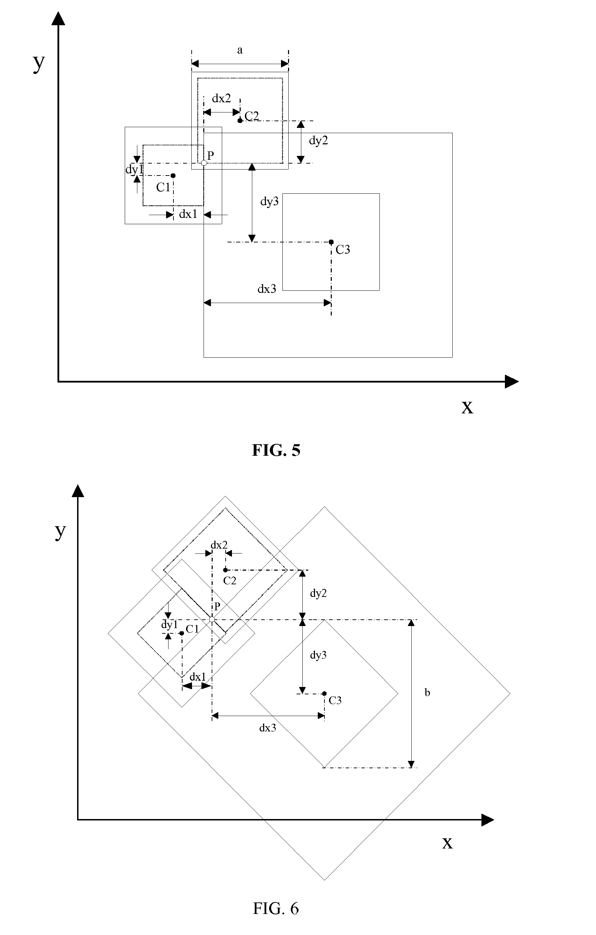

Step 4061: As shown in FIG. 5, the square expressed with real lines and centering on the chromaticity coordinate of an important color defines the range of important colors. These squares all have a same side length, a. A half side length is defined as a threshold value, a/2. In other words, the geometric dimensions of these squares that define the range of important colors are limited by this threshold value.

Step 4062: the position of RGB chromaticity coordinate (x, y) (P in FIG. 5) calculated in Step 405 is found in chromaticity coordinate system and marked as P. Then the horizontal distance and vertical distance from P to the chromaticity coordinates of all important colors are calculated. As shown in FIG. 5, taking three chromaticity coordinates of important colors for example, the calculation employs formula (2-8).

$$\begin{cases} dx1 = |x1 - x|; dy1 = |y1 - y|; \\ dx2 = |x2 - x|; dy2 = |y2 - y|; \\ dx3 = |x3 - x|; dy3 = |y3 - y|; \end{cases} \qquad \text{formula (2-8)}$$

Step 4063: d1, d2 and d3 are calculated with formula (2-9).

$$d1 = \max(dx1, dy1); d2 = \max(dx2, dy2); d3 = \max(dx3, dy3) \qquad \text{formula (2-9)}$$

with reference to FIG. 5, it may be concluded that d1, d2 and d3 are respectively equal to a half side length of the three squares (expressed with broken lines in FIG. 5) of which centers are the chromaticity coordinates of three important colors respectively, and external boundaries pass the current RGB chromaticity coordinate (x, y) and are all parallel or perpendicular to the coordinate axes of the chromaticity coordinate system.

Step 4064: d1, d2 and d3 are compared and a smallest one is selected as d, i.e., $d=\min(d1, d2, d3)$. Thus it can be seen, 2d is equal to the smallest side length of the three squares in Step 4063, i.e. the square with the smallest side length is selected. Provided that d1<d2<d3, then as shown in FIG. 5, 2d is equal to the side length 2d1 of the square centering on C1 and expressed with broken lines in FIG. 5. This step is used to determine which important color's chromaticity coordinate the current RGB chromaticity coordinate (x, y) should utilize as a benchmark to calculate a weakening coefficient K at the subsequent step.

Step 4065: the weakening coefficient K is calculated by the following process: determining whether d is greater than the threshold value, i.e. determining whether d>a/2; and if d>a/2, RGB chromaticity coordinate doesn't belong to the range of important colors, and K=1; if d≤a/2, RGB chromaticity coordinate belongs to the range of important colors, and K=2d/a. Obviously, the weakening coefficient is calculated based on the square with the smallest side length among the three squares in Step 4063 (i.e. the smallest square). Further, from the formula for calculating the weakening coefficient when RGB chromaticity coordinate belongs to the range of important colors, it may be obtained: the weakening coefficient is equal to the ratio between the side length of the smallest square in Step 4063 and the side length of the square limited by the threshold value that is used to indicate the range of important colors.

The determination on whether RGB chromaticity coordinate (x, y) belongs to the range of important colors and the method for calculating the weakening coefficient in Step 406 may also adopt the model about range of important colors defined by Model 2 in FIG. 4. In this case, Step 4061-Step 4065 may be replaced with the following steps:

Step 40611: As shown in FIG. 6, the squares expressed with real lines and centering on chromaticity coordinates of important colors define the range of important colors. The diagonal length of these squares is equal to b. A half diagonal length is defined as threshold value, b/2. In other words, the geometric dimensions of the squares that define the range of important colors are limited by the threshold value.

Step 40621: the process is the same as Step 4062.

Step 40631:11, 12 and 13 are calculated with formula (2-10):

$$l1 = dx1 + dy1; l2 = dx2 + dy2; l3 = dx3 + dy3 \qquad \text{formula (2-10)}$$

As shown in FIG. 6, it may concluded that $l1$, $l2$ and $l3$ are respectively equal to a half diagonal length of the three squares (expressed with broken lines in FIG. 6) of which centers are the chromaticity coordinates of three important colors, and external boundaries pass the current RGB chromaticity coordinate (x, y) (P in FIG. 6) and all form a 45-degree angle with the coordinate axes of the chromaticity coordinate system.

Step 40641: $l1$, $l2$ and $l3$ are compared, and a smallest one is selected as $l$, i.e., $l=\min(l1, l2, l3)$. Thus it can be seen, $2l$ is equal to the smallest diagonal of the three squares in Step 40631, i.e. the square with the shortest diagonal is selected. Provided that $l1 < l2 < l3$, then as shown in FIG. 6, $2l$ is equal to the diagonal length $2l1$ of the square centering on C1 and expressed with broken lines in FIG. 6. This step is used to determine which chromaticity coordinate the current RGB chromaticity coordinate (x, y) should utilize as a benchmark to calculate a weakening coefficient K at the subsequent step.

Step 40651: the weakening coefficient K is calculated by the following process: determining whether $l > b/2$, and if $l > b/2$, RGB chromaticity coordinate doesn't belong to the range of important colors, and K=1; if $l < b/2$, RGB chromaticity coordinate belongs to the range of important colors, and K=$2l/b$. Obviously, the weakening coefficient K is calculated based on the square with the shortest diagonal among the three squares in Step 40631 (i.e. the smallest square). Further, according to geometric knowledge, the ratio between diagonal length and side length of a square is fixed, and from the formula for calculating the weakening coefficient when RGB chromaticity coordinate belongs to the range of important colors, it may be obtained: when RGB chromaticity coordinate belongs to the range of important colors, weakening coefficient will be equal to the ratio between the diagonal length of the smallest square in Step 40631 and the diagonal side length of the square limited by the threshold value that is used to indicate the range of important colors, and also equal to the ratio between the side length of the smallest square in Step 40631 and the side length of the square limited by the threshold value that is used to indicate the range of important colors.

Step 407: The color gamut expansion unit 204 receives a color gamut expansion coefficient VGE freely set by the user via the color gamut expansion coefficient input unit 211 and obtains a corrected $VGE_{new}$ in consideration of the weakening coefficient K obtained from Step 406, here, $VGE_{new}=(VGE-1)*K+1$. Then expansion process for a and b is performed in linear Lab color space to obtain $a_{new}$ and $b_{new}$. The calculation method employs formula (2-11):

$$\begin{cases} a_{new} = a \cdot VGE_{new}; \\ b_{new} = b \cdot VGE_{new}; \end{cases} \qquad \text{formula (2-11)}$$

In this way, for colors that don't belong to the range of important colors, K=1, and thus $VGE_{new}$ is equal to VGE, and the effect of color gamut expansion is the same as the effect in Embodiment 1 and/or Embodiment 2. For colors belonging to the range of important colors, K<1, and thus $VGE_{new}<VGE$. Moreover, the closer the chromaticity coordinate to the chromaticity coordinate of an important color, the closer $VGE_{new}$ to 1, thereby weakening the expansion of important colors during color gamut expansion, and thus the degree of distortion of important colors is reduced during color gamut expansion and the important colors are protected.

The solution for management of important colors put forth in this embodiment has the following advantages:

1. In this embodiment, chromaticity coordinate is used to mark the center of an important color area, showing desirable accuracy, this is because the color of a same object has different degree of brightness under illumination of different intensity, but its chromaticity coordinate can maintain stable, i.e. color sensation is not changed.

2. A plurality of important color areas can be easily set according to this embodiment, and the size of each important color area may be set flexibly.

3. In this embodiment, calculation is conducted on a 2D plane and the boundaries of the defined important color areas adopt unified simple geometric shapes, so the algorithm is simple and consistent, and a parallel algorithm structure can be easily adopted. The adoption of squares (Model 1 in particular) makes algorithmic description very concise and reduces calculation quantity and improves calculation speed and real-timeliness of this embodiment.

4. The weakening coefficient K of color gamut expansion set in this embodiment can gradually changes from the center of an important color to the boundary (from 0 to 1). In this way, the degree of color gamut expansion has smooth transition between unimportant colors and important colors.

Step 408: the linear Lab color space reverse transform unit 207 transforms L, $a_{new}$ and $b_{new}$ back to values which are in XYZ chroma system to obtain $X_{new}$, $Y_{new}$ and $Z_{new}$ by using formula (2-12):

$$\begin{bmatrix} X_{new} \\ Y_{new} \\ Z_{new} \end{bmatrix} = T_{Lab}^{-1} \begin{bmatrix} L \\ a_{new} \\ b_{new} \end{bmatrix} \qquad \text{formula (2-11)}$$

Wherein, $T^{-1}{}_{,Lab}$ is the inverse matrix of $T_{Lab}$ in Step 404, so different color temperature value corresponds to different $T^{-1}{}_{,Lab}$, all $T^{-1}{}_{,Lab}$ are stored in the memory of the linear Lab color space reverse transform unit 207, and the linear Lab color space reverse transform unit 207 reads corresponding $T^{-1}{}_{,Lab}$ according to the color temperature value set by the user and uses formula (2-12) to obtain $X_{new}$, $Y_{new}$ and $Z_{new}$ at the set color temperature.

Step 409: The wide color gamut XYZ reverse transform unit 208 transforms $X_{new}$, $Y_{new}$ and $Z_{new}$ tristimulus values back to the $R_{new}$, $G_{new}$ and $B_{new}$ tristimulus values which are in RGB system.

Step 409 may (but not limited to) be realized by the following process:

Step 4091: a reverse transform matrix for a wide color gamut display device XYZ chroma system

$$\begin{bmatrix} T11 & T12 & T13 \\ T21 & T22 & T23 \\ T31 & T32 & T33 \end{bmatrix}$$ is used to transform $X_{new}$, $Y_{new}$ and $Z_{new}$ to $R_{snew}$, Gsnew and $B_{snew}$ which are in the linear color space by using formula (2-13). The matrix $\begin{bmatrix} T11 & T12 & T13 \\ T21 & T22 & T23 \\ T31 & T32 & T33 \end{bmatrix}$ is determined by tricolor chromaticity coordinates of the wide color gamut display device and the color temperature corresponding to the brightest white field of this display device. Its calculation method may be obtained from related colorimetric knowledge.

$$\begin{bmatrix} R_{snew} \\ G_{snew} \\ B_{snew} \end{bmatrix} = \begin{bmatrix} T11 & T12 & T13 \\ T21 & T22 & T23 \\ T31 & T32 & T33 \end{bmatrix} \cdot \begin{bmatrix} X_{new} \\ Y_{new} \\ Z_{new} \end{bmatrix} \qquad \text{Equation (2-13)}$$

Step 4092: by using the preestablished lookup tables for mapping the tristimulus values in linear Lab color space to the tristimulus values in RGB system, $R_{snew}$, $G_{snew}$ and $B_{snew}$ are transformed to $R_{new}$, $G_{new}$ and $B_{new}$ tristimulus values which are in RGB system.

In the foregoing transformation process, Step 408 and Step 409 may be merged into one step.

Step 410: the RGB signal output unit 209 outputs $R_{new}$, $G_{new}$ and $B_{new}$.

As all matrices the transformation process needs in the system and method for expanding color gamut in this embodiment may be calculated in advance and stored in a memory, the matrices multiplication involved needs only a few linear calculations. Further, no nonlinear calculation in the algorithm according to this embodiment is needed, and thus the calculation efficiency is high and the requirement of large-data-volume video on real-time processing can be met.

In this embodiment, the input color information of pixels is RGB signal. However, it will be appreciated by those skilled in the art that other signals, such as YCbCr signals may also be used as color information of pixels in the present invention.

The beneficial technical effects achieved by the present invention include:

1. The system and method for expanding color gamut according to the present invention can continuously adjust the color gamut expansion coefficient.

2. The method for expanding color gamut according to the present invention provides high calculation efficiency and low demand on system resource, and the requirement of real-time processing of video signals with large data volume can be met satisfactorily.

3. The color gamut expansion is performed in a linear Lab color space. It is a good approximation of standard Lab color space which is a uniform color space defined by International Commission on Illumination (CIE) and a standard working space in color management flow. The so-called uniform color space refers to a color space in which human eyes perceive equal color difference in respectively equal geometrical difference in the color space. Nevertheless, the algorithm for transforming the color signal of video to Lab color space is complex and unfavorable for real-time processing, so the method for expanding color gamut in this embodiment defines working space in linear Lab color space. Transformation algorithm is simplified and calculation amount is reduced significantly. Moreover, as the algorithm of color gamut expansion is performed in linear Lab color space that is approximate to the uniform color space, comparing with the adjustment method based on chromatic signal, hue deviation may be avoided effectively and precision and accuracy may be improved through the embodiment.

4. The management process of important colors is introduced in the system and method for color gamut expansion, and thus important colors are prevented from excessive distortion during color gamut expansion.

The foregoing embodiments describe in detailed the objects, technical solutions and beneficial effects of the present invention. It should be understood that the foregoing descriptions are specific embodiments of the present invention and are not intended to limit the present invention. For those skilled in the art, the present invention may have various changes and modifications. All modifications, identical replacements and improvements made without departing from the spirit and principle of the present invention shall be within the protection scope of the present invention.

**Claims**

1.  A system for expanding color gamut, comprising:

    a signal input unit configured to input color information of pixels;
    a forward transform unit configured to transform the color information of pixels to L, a and b values in a linear Lab color space;
    a color gamut expansion unit configured to expand the L, a and b values provided by the forward transform unit to new L, a and b values in the linear Lab color space according to a color gamut expansion coefficient;
    a reverse transform unit configured to transform the expanded L, a and b values to color information of pixels in a large color gamut; and
    a signal output unit configured to output the color information of pixels in the large color gamut.

2.  A system for expanding color gamut as in claim 1, further comprising:

    an important color management unit configured to determine whether a current color belongs to a range of important colors and calculate a weakening coefficient according to the result of determination;
    wherein the color gamut expansion unit is further configured to receive the weakening coefficient and expand the L, a and b values provided by the forward transform unit to the new L, a and b values in the linear Lab color space according to the color gamut expansion coefficient and the weakening coefficient.

3.  A system for expanding color gamut as in claim 1 or 2, further comprising:

    a color gamut expansion coefficient input unit for a user to input the color gamut expansion coefficient.

4.  A system for expanding color gamut as in claim 1 or 2, further comprising:

    a color temperature select unit for a user to select a color temperature value which is used as an input parameter of the forward transform unit and the reverse transform unit.

5.  A system for expanding color gamut as in claim 2, wherein the important color management unit comprises:

    a chromaticity coordinate calculation unit configured to calculate the chromaticity coordinate of a current color;

and

a weakening coefficient calculation unit configured to determine whether the current color belongs to the range of important colors according to the chromaticity coordinate of the current color, and calculate the weakening coefficient according to the result of determination.

6. A system for expanding color gamut as in claim 1 or 2, wherein the color information of pixels is RGB signals.

7. A system for expanding color gamut as in claim 6, wherein the forward transform unit comprises:

a XYZ chroma system forward transform unit configured to transform R, G and B tristimulus values in RGB system to X, Y and Z tristimulus values in XYZ system; and
a linear Lab color space forward transform unit configured to transform X, Y and Z tristimulus values to L, a and b values in the linear Lab color space;
wherein the reverse transform unit comprises:

a linear Lab color space reverse transform unit configured to transform the expanded L, a and b values to wide color gamut X, Y and Z tristimulus values which are in XYZ system; and
a wide color gamut XYZ reverse transform unit configured to transform the wide color gamut X, Y and Z tristimulus values to R, G and B tristimulus values which are in the wide color gamut RGB system.

8. A method for expanding color gamut, comprising steps of:

1) inputting color information of pixels;
2) transforming the color information of pixels to L, a and b values in a linear Lab color space;
3) expanding the L, a and b values provided by Step 2) to new L, a and b values in the linear Lab color space according to a color gamut expansion coefficient;
4) transforming the expanded L, a and b values to color information of pixels which are in a large color gamut;
5) outputting the color information of pixels in the large color gamut.

9. A method for expanding color gamut as in claim 8, wherein Step 3) comprises: calculating chromaticity coordinate of a current color, determining whether the current color belongs to a range of important colors, calculating a weakening coefficient according to result of determination, receiving the color gamut expansion coefficient, and calculating a corrected color gamut expansion coefficient according to the color gamut expansion coefficient and the weakening coefficient; and expanding the L, a and b values provided by Step 2) to the new L, a and b values which are in the linear Lab color space according to the corrected color gamut expansion coefficient.

10. A method for expanding color gamut as in claim 8 or 9, wherein, in Step 3), the color gamut expansion coefficient is input by the user.

11. A method for expanding color gamut as in claim 8 or 9, wherein Step 2) comprises: selecting a color temperature value by a user, and transforming the color information of pixels to the L, a and b values in the linear Lab color space according to the color temperature value; and wherein Step 4) comprises: transforming the expanded L, a and b values to the color information of pixels in the wide color gamut according to the color temperature value.

12. A method for expanding color gamut as in claim 8 or 9, wherein the color information of pixels is RGB signals.

13. A method for expanding color gamut as in claim 12, wherein Step 2) comprises sub-steps of:

21) transforming R, G and B tristimulus values in RGB system to X, Y and Z tristimulus values in XYZ system;
22) transforming the X, Y and Z tristimulus values to the L, a and b values which are in the linear Lab color space;
Step 4) comprises sub-steps of:

41) transforming the expanded color gamut L, a and b values to wide color gamut X, Y and Z tristimulus values which are in XYZ system;
42) transforming the wide color gamut X, Y and Z tristimulus values to R, G and B tristimulus values which are in the wide color gamut RGB system.

14. A method for expanding color gamut as in claim 9, wherein in Step 3), determining whether the current color belongs to the range of important colors comprises steps of:

31) setting chromaticity coordinate benchmark values for all important colors;
32) if, in chromaticity coordinate system, the chromaticity coordinate of the current color falls in a geometric region that has specific dimensions limited by preset threshold values, and centers on the chromaticity coordinate benchmark value, then the current color is denoted to belong to the range of important colors; otherwise, the current color doesn't belong to the range of important colors.

**15.** A method for expanding color gamut as in claim 14, wherein in Step 32), the geometric figure is a square and the sides of the square are parallel or perpendicular to the coordinate axes of the chromaticity coordinate system.

**16.** A method for expanding color gamut as in claim 15, wherein in Step 32), the geometric figure is a square and the sides of the square form a 45-degree angle with the coordinate axes of the chromaticity coordinate system.

**17.** A method for expanding color gamut as in claim 15 or 16, wherein in Step 3), calculating the weakening coefficient and the corrected expansion coefficient comprises steps of:

33) when the current color doesn't belong to the range of important colors, taking the weakening coefficient K=1; when the current color belongs to the range of important colors, for each chromaticity coordinate benchmark value, squaring that pass the chromaticity coordinate point of the current color and center on the chromaticity coordinate benchmark value will be drawn; taking the ratio between the side length of the smallest square and the side length of the square limited by the threshold as the weakening coefficient K;
34) calculating the corrected color gamut expansion coefficient using the weakening coefficient K and the color gamut expansion coefficient VGE according to an equation of $VGE_{new}=(VGE-1)*K+1$.

**FIG. 1**

**Control System** — 1

RGB Signal Input Unit — 201

**User Select Unit** — 2

Color Temperature Select Unit — 210

Color Gamut Expansion Coefficient Input Unit — 211

Important Color Management Unit — 3

XYZ Chroma System Forward Transform Unit — 202

Chromaticity Coordinate Calculation Unit — 205

Linear Lab Color Space Forward Transform Unit — 203

Weakening Coefficient Calculation Unit — 206

Color Gamut Expansion Unit — 204

Linear Lab Color Space Reverse Transform Unit — 207

Wide Color Gamut XYZ Reverse Transform Unit — 208

RGB Signal Output Unit — 209

**FIG. 2**

y

C₂
(x2,y2)

C₁
(x1,y1)

C₃
(x3,y3)

x

**FIG. 3**

y

C₂
(x2,y2)

C₁
(x1,y1)

C₃
(x3,y3)

x

**FIG. 4**

**FIG. 5**

FIG. 6

# INTERNATIONAL SEARCH REPORT

| International application No. |
|---|
| PCT/CN2009/000609 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H04N1/-, H04N9/-, G06F, G09G5/-

Documentation searched other than minimum documentation to the extent that such documents are included in the fields searched

Electronic data base consulted during the international search (name of data base and, where practicable, search terms used)

WPI, EPODOC, PAJ: gamut,colo?rspace,colo?r space,wide,large,colo?r,range,extend+,extension,expand+, conver???? , wide,large,display, transform???, temperature,chroma+

CNPAT, CNKI:

**C. DOCUMENTS CONSIDERED TO BE RELEVANT**

| Category* | Citation of document, with indication, where appropriate, of the relevant passages | Relevant to claim No. |
|---|---|---|
| X | CN101068368A(UNIV DONGNAN)07 Nov. 2007(07.11.2007)<br><br>the description page 2 line 2–page 4 line 17, page 5 line 11-page 7 line 15, figure 1 | 1, 6, 8, 12 |
| Y | See the same pages | 7, 13 |
| Y | HAO JIANG, WEI GUO. Fast LUT Architecture In Gamut Extension. Information Technology. Apr. 2008, No. 4, page 141, ISSN1009-2552 | 7, 13 |
| A | KR20030052451A(KOREA ELECTRONICS TELECOMM)27 June 2003(27.06.2003)the abstract | 1-17 |
| A | US6147772A(SILICON GRAPHICS INC)14 Nov. 2000(14.11.2000)the whole document | 1-17 |
| A | US2008043270A1(SAMSUNG ELECTRONICS CO LTD)21 Feb. 2008(21.02.2008) the whole document | 1-17 |

☐ Further documents are listed in the continuation of Box C.  ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 20 Aug. 2009(20.08.2009) | **10 Sep. 2009 (10.09.2009)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>GUO Xiaoyu<br><br>Telephone No. (86-10)62411453 |
|---|---|

Form PCT/ISA/210 (second sheet) (April 2007)

**INTERNATIONAL SEARCH REPORT**
Information on patent family members

International application No.

PCT/CN2009/000609

| Patent Documents referred in the Report | Publication Date | Patent Family | Publication Date |
|---|---|---|---|
| CN101068368A | 07.11.2007 | NONE | |
| KR20030052451A | 27.06.2003 | KR100406868B | 21.11.2003 |
| US6147772A | 14.11.2000 | WO9737281A1 | 09.10.1997 |
| | | US5946113A | 31.08.1999 |
| US2008043270A1 | 21.02.2008 | KR20080016362A | 21.02.2008 |

Form PCT/ISA/210 (patent family annex) (April 2007)

EP 2 284 830 A1

# INTERNATIONAL SEARCH REPORT

International application No.

*PCT/CN2009/000609*

A.  CLASSIFICATION OF SUBJECT MATTER

According to International Patent Classification (IPC) or to both national classification and IPC

G09G5/02(2006.01)i

H04N9/64(2006.01)i

Form PCT/ISA/210 (extra sheet) (April 2007)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evaluation of smoothness tonal change reproduction on multi-primary display: Comparison of color conversion algorithm. *Proc. SPIE,* 2004, vol. 5289, 275-283